# EUROPEAN PATENT SPECIFICATION

(11) **EP 4 056 932 B1**
(45) Date of publication and mention of the grant of the patent: **28.10.2026**
(21) Application number: 20884967.9
(22) Date of filing: 04.11.2020
(51) Int. Cl.: F25D 21/08, H05B 3/48

(54) **HEATING ASSEMBLY HAVING A HYDROPHOBIC LAYER FOR A REFRIGERATOR APPLIANCE**
HEIZANORDNUNG MIT EINER HYDROPHOBER SCHICHT FÜR EIN KÜHLSCHRANKGERÄT
ENSEMBLE DE CHAUFFAGE AYANT UNE COUCHE HYDROPHOBE POUR UN APPAREIL DE RÉFRIGÉRATION

(30) Priority: 06.11.2019 US 201916675659
(43) Date of publication of application: 14.09.2022
(73) Proprietor: Haier Smart Home Co., Ltd., Qingdao, Shandong 266101 (CN); Qingdao Haier Refrigerator Co., Ltd, Qingdao, Shandong 266101 (CN); Haier US Appliance Solutions, Inc., Wilmington, DE 19801 (US)
(72) Inventor: VIJAYAN, Vineeth, Wilmington, Delaware 19801 (US); KYRIACOU, Stephanos, Wilmington, Delaware 19801 (US); RYU, Choon Jae, Wilmington, Delaware 19801 (US)
(74) Representative: Winter, Brandl - Partnerschaft mbB
(86) International application number: PCT/CN2020/126436
(87) International publication number: WO 2021/088857

(56) References cited:
- WO-A2-2008/102355
- CN-A- 1 475 738
- CN-A- 1 584 459
- CN-A- 1 584 459
- CN-A- 1 896 653
- CN-A- 103 320 012
- CN-A- 103 776 228
- CN-A- 104 244 478
- CN-A- 106 642 921
- CN-A- 107 302 808
- CN-A- 108 562 100
- CN-A- 109 028 724
- CN-U- 204 090 179
- US-A- 2 877 630
- US-A- 5 545 878
- US-A1- 2008 102 309
- US-A1- 2015 111 063
- US-A1- 2018 299 183
- US-A1- 2018 299 183

## Description

The present subject matter relates to heating assemblies for refrigerator appliances.

### BACKGROUND OF THE INVENTION

Refrigerators or refrigerator appliances generally include a cabinet that defines a chilled chamber. The chilled chamber is commonly cooled with a sealed system having an evaporator. One problem that may be encountered with existing refrigerator appliances is inefficient defrosting of the evaporator. For example, when the evaporator is active, frost can accumulate on the evaporator and thereby reduce efficiency of the evaporator. One effort to reduce or eliminate frost from the evaporator has been to utilize a heater, such as an electrical heater, to heat the evaporator when the evaporator is not operating.

CN 1 584 459 A, CN 108 562 100 A, CN 204 090 179 U, US 2018/299183 A1, CN 103 776 228 A present heating assemblies for refrigerators.

Further relevant prior art is disclosed in documents WO2008/102355A2, US2015/111063A1, CN109028724A and US5545878A.

Using an electrical heater to defrost an evaporator can pose certain challenges. As an example, certain refrigerators utilize a flammable refrigerant within the sealed system. In such systems, a surface temperature of the heater is generally limited to a temperature well below the auto-ignition temperature of the flammable refrigerant. However, the evaporator generally requires a certain power output from the heater to suitably defrost.

An electrical heater having a relatively large surface area is usually mounted in close proximity to the evaporator to ensure adequate heat is provided without exceeding the auto-ignition temperature of the flammable refrigerant. During operation, melted water dripping from the evaporator may fall onto the electrical heater, which in turn may generate a noticeable hissing noise as the melted water boils on the surface of the electrical heater. Many users find this noise easy to distracting or undesirable. Some existing systems provide a drip tray over a electrical heater to block or redirect melted water before it is able to strike the heater and boil. Nonetheless, such shields can block heat and reduce the overall efficiency of the heater or evaporator. Additionally or alternatively, such shields can lead to undesirable pressure drops across the evaporator.

Accordingly, a heating assembly with certain noise-reduction or noise-prevention features would be useful. In particular, it would be advantageous to provide a heating assembly that is configured to minimize the presence or boiling of water on a surface of the heating assembly.

### BRIEF DESCRIPTION OF THE INVENTION

The invention is defined in the independent claim 1. Further embodiments are disclosed in the dependent claims. Aspects and advantages of the invention will be set forth in part in the following description, or may be obvious from the description, or may be learned through practice of the invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a front elevation view of a refrigerator appliance according to exemplary embodiments of the present disclosure.
FIG. 2 provides a schematic view of various components of the exemplary embodiments of FIG. 1.
FIG. 3 provides a schematic plan view of a heating assembly for use in a refrigerator appliance according to exemplary embodiments of the present disclosure.
FIG. 4 provides a section view of a portion of the exemplary heating assembly of FIG. 3.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention, as long as they are in accordance with the following claims. For instance, features illustrated or described as part of one embodiment can be used with another embodiment to yield a still further embodiment. The scope of the invention is defined by the appended claims.

As used herein, the term "or" is generally intended to be inclusive (i.e., "A or B" is intended to mean "A or B or both"). The terms "first," "second," and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

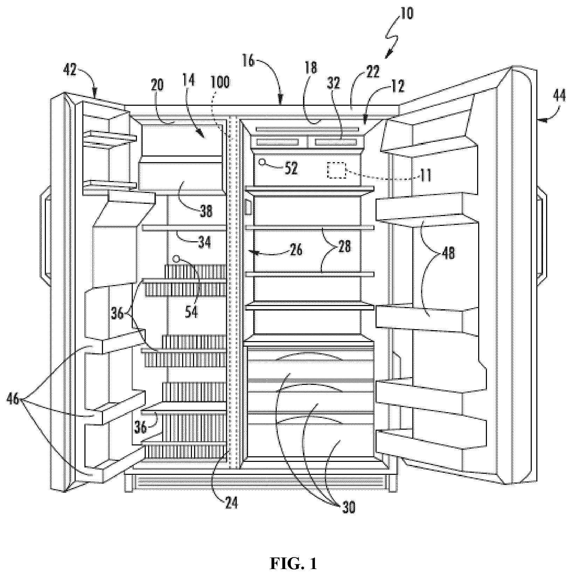

FIG. 1 provides a front elevation view of a representative refrigerator appliance 10 according to exemplary embodiments of the present disclosure. More specifically, for illustrative purposes, the present disclosure is described with a refrigerator appliance 10 having a construction as shown and described further below. As used herein, a refrigerator appliance includes appliances such as a refrigerator/freezer combination, side-by-side, bottom mount, compact, and any other style or model of refrigerator appliance. Accordingly, other configurations including multiple and different styled compartments could be used with refrigerator appliance 10, it being understood that the configuration shown in FIG. 1 is by way of example only.

Refrigerator appliance 10 includes a fresh food storage compartment 12 and a freezer storage compartment 14.Freezer compartment 14 and fresh food compartment 12 are arranged side-by-side within an outer case 16 and defined by inner liners 18 and 20 therein. A space between case 16 and liners 18, 20 and between liners 18, 20 may be filled with foamed-in-place insulation. Outer case 16 normally is formed by folding a sheet of a suitable material, such as pre-painted steel, into an inverted U-shape to form the top and side walls of case 16.A bottom wall of case 16 normally is formed separately and attached to the case side walls and to a bottom frame that provides support for refrigerator appliance 10.Inner liners 18 and 20 are molded from a suitable plastic material to form freezer compartment 14 and fresh food compartment 12, respectively. Alternatively, liners 18, 20 may be formed by bending and welding a sheet of a suitable metal, such as steel.

A breaker strip 22 extends between a case front flange and outer front edges of liners 18, 20.Breaker strip 22 is formed from a suitable resilient material, such as an extruded acrylo-butadiene-styrene based material (commonly referred to as ABS).The insulation in the space between liners 18, 20 is covered by another strip of suitable resilient material, which also commonly is referred to as a mullion 24.In one embodiment, mullion 24 is formed of an extruded ABS material. Breaker strip 22 and mullion 24 form a front face, and extend completely around inner peripheral edges of case 16 and vertically between liners 18, 20.Mullion 24, insulation between compartments, and a spaced wall of liners separating compartments, sometimes are collectively referred to herein as a center mullion wall 26.In addition, refrigerator appliance 10 includes shelves 28 and slide-out storage drawers 30, sometimes referred to as storage pans, which normally are provided in fresh food compartment 12 to support items being stored therein.

Refrigerator appliance 10 can be operated by one or more controllers 11 or other processing devices according to programming or user preference via manipulation of a control interface 32 mounted, for example, in an upper region of fresh food storage compartment 12 and connected with controller 11.Controller 11 may include one or more memory devices and one or more microprocessors, such as a general or special purpose microprocessor operable to execute programming instructions or micro-control code associated with the operation of the refrigerator appliance 10.The memory may represent random access memory such as DRAM, or read only memory such as ROM or FLASH. In one embodiment, the processor executes programming instructions stored in memory. The memory may be a separate component from the processor or may be included onboard within the processor. Controller 11 may include one or more proportional-integral ("PI") controllers programmed, equipped, or configured to operate the refrigerator appliance according to example aspects of the control methods set forth herein. Accordingly, as used herein, "controller" includes the singular and plural forms.

Controller 11 may be positioned in a variety of locations throughout refrigerator appliance 10.In the illustrated embodiment, controller 11 may be located, for example, behind an interface panel 32 or door 42 or 44.Input/output ("I/O") signals may be routed between the control system and various operational components of refrigerator appliance 10 along wiring harnesses that may be routed through, for example, the back, sides, or center mullion wall26. Typically, through user interface panel 32, a user may select various operational features and modes and monitor the operation of refrigerator appliance 10.In one embodiment, the user interface panel 32 may represent a general purpose I/O ("GPIO") device or functional block. In one embodiment, the user interface panel 32 may include input components, such as one or more of a variety of electrical, mechanical or electro-mechanical input devices including rotary dials, push buttons, and touch pads. The user interface panel 32 may include a display component, such as a digital or analog display device designed to provide operational feedback to a user. User interface panel 32 may be in communication with controller 11 via one or more signal lines or shared communication busses.

In some embodiments, one or more temperature sensors are provided to measure the temperature in the fresh food compartment 12 and the temperature in the freezer compartment 14.For example, a first temperature sensor 52 may be disposed in the fresh food compartment 12 and may measure the temperature in the fresh food compartment 12.A second temperature sensor 54 may be disposed in the freezer compartment 14 and may measure the temperature in the freezer compartment 14.This temperature information can be provided, for example, to controller 11 for use in operating refrigerator 10.These temperature measurements may be taken intermittently or continuously during operation of the appliance or execution of a control system.

A shelf 34 or wire baskets 36 may also be provided in freezer compartment 14.Additionally or alternatively, an ice maker 38 may be provided in freezer compartment 14.A freezer door 42 and a fresh food door 44 close access openings to freezer and fresh food compartments 14, 12, respectively. Each door 42, 44 is mounted to rotate about its outer vertical edge between an open position, as shown in FIG. 1, and a closed position (not shown) closing the associated storage compartment. In alternative embodiments, one or both doors 42, 44 may be slidable or otherwise movable between open and closed positions. Freezer door 42 includes a plurality of storage shelves 46, and fresh food door 44 includes a plurality of storage shelves 48.

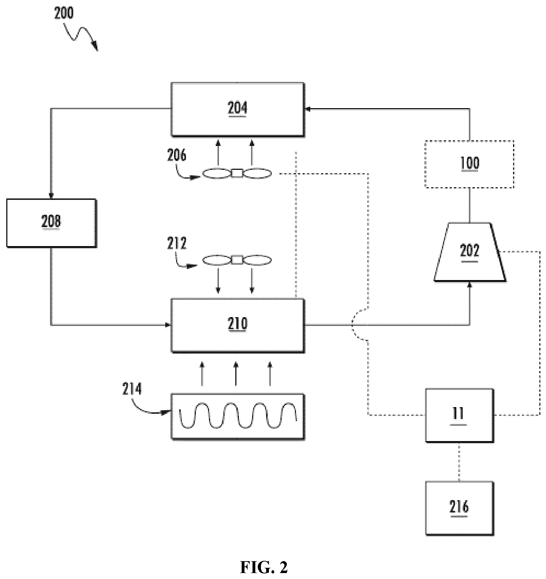

Referring now to FIG. 2, refrigerator appliance 10 may include a refrigeration system 200.In general, refrigeration system 200 is charged with a refrigerant that is flowed through various components and facilitates cooling of the fresh food compartment 12 and the freezer compartment 14.Refrigeration system 200 may be charged or filled with any suitable refrigerant. For example, refrigeration system 200 may be charged with a flammable refrigerant, such as R441A, R600a, isobutene, isobutane, etc.

Refrigeration system 200 includes a compressor 202 for compressing the refrigerant, thus raising the temperature and pressure of the refrigerant. Compressor 202 may for example be a variable speed compressor, such that the speed of the compressor 202 can be varied between zero (0) and one hundred (100) percent by controller 11.Refrigeration system 200 may further include a condenser 204, which may be disposed downstream of compressor 202 (e.g., in the direction of flow of the refrigerant). Thus, condenser 204 may receive refrigerant from the compressor 202, and may condense the refrigerant by lowering the temperature of the refrigerant flowing therethrough due to, for example, heat exchange with ambient air. A condenser fan 206 may be used to force air over condenser 204 as illustrated to facilitate heat exchange between the refrigerant and the surrounding air. Condenser fan 206 can be a variable speed fan. Thus, the speed of condenser fan 206 may be controlled or set anywhere between and including, for example, zero (0) and one hundred (100) percent. The speed of condenser fan 206 can be determined by, and communicated to, fan 206 by controller 11.

Refrigeration system 200 further includes an evaporator 210 disposed downstream of the condenser 204.Additionally, an expansion device 208 (e.g., thermal expansion valve) may be utilized to expand the refrigerant, thus further reduce the pressure of the refrigerant, leaving condenser 204 before being flowed to evaporator 210.Evaporator 210 generally is a heat exchanger that transfers heat from air passing over the evaporator 210 to refrigerant flowing through evaporator 210, thereby cooling the air and causing the refrigerant to vaporize. An evaporator fan 212 may be used to force air over evaporator 210 as illustrated. As such, cooled air is produced and supplied to refrigerated compartments 12, 14 of refrigerator appliance 10.In certain embodiments, evaporator fan 212 can be a variable speed evaporator fan. Thus, the speed of fan 212 may be controlled or set anywhere between and including, for example, zero (0) and one hundred (100) percent. The speed of evaporator fan 212 can be determined by, and communicated to, evaporator fan 212 by controller 11.

Evaporator 210 may be in communication with fresh food compartment 12 and freezer compartment 14 to provide cooled air to compartments 12, 14. Alternatively, refrigeration system 200 may include more two or more evaporators, such that at least one evaporator provides cooled air to fresh food compartment 12 and at least one evaporator provides cooled air to freezer compartment 14.In other embodiments, evaporator 210 is in communication with any suitable component of the refrigerator appliance 10.For example, in some embodiments, evaporator 210 is in communication with ice maker 38, such as with an ice compartment of the ice maker 38.From evaporator 210, refrigerant may flow back to and through compressor 202, which may be downstream of evaporator 210, thus completing a closed refrigeration loop or cycle.

As shown in FIG. 2, a defrost heater 214 is utilized to defrost evaporator 210 (i.e., to melt ice that accumulates on evaporator 210).Heater 214 is configured to be positioned adjacent or in close proximity of the (e.g., below) evaporator 210 within fresh food compartment 12 or freezer compartment 14.Heater 214 may be activated periodically; that is, a period of time *t_{ice}* elapses between when heater 214 is deactivated and when heater 214 is reactivated to melt a new accumulation of ice on evaporator 210. The period of time *t_{ice}* may be a preprogrammed period such that time *t_{ice}* is the same between each period of activation of heater 214, or, alternatively, the period of time may vary. Alternatively, heater 214 may be activated based on some other condition, such as the temperature of evaporator 210 or any other appropriate condition.

Optionally, a defrost termination thermostat 216 may be used to monitor the temperature of evaporator 210 such that defrost heater 214 is deactivated when thermostat 216 measures that the temperature of evaporator 210 is above freezing [i.e., greater than zero degrees Celsius (0° C), which is 273.15 K]. .In some embodiments, thermostat 216 can send a signal to controller 11 or other suitable device to deactivate heater 214 when evaporator 210 is above freezing. In other embodiments, defrost termination thermostat 216 includes a switch such that heater 214 is switched off when thermostat 216 measures that the temperature of evaporator 210 is above freezing.

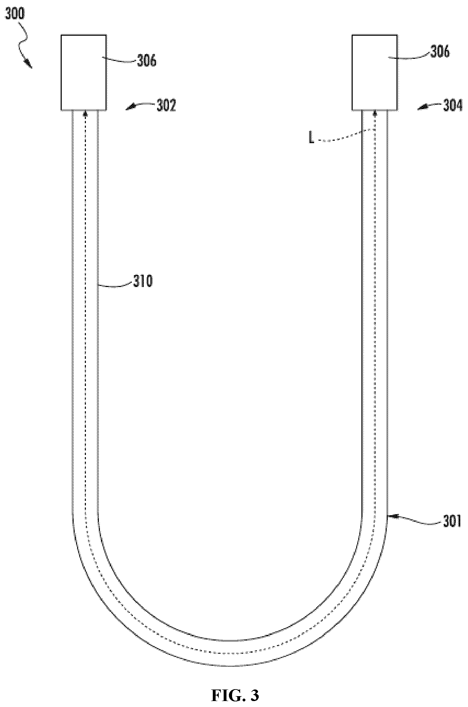

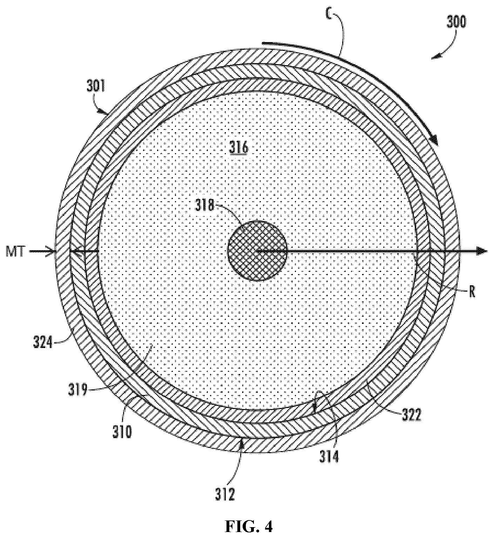

FIG. 3 provides a schematic plan view of a heating assembly 300 according to exemplary embodiments of the present disclosure. FIG. 4 provides a section view of a portion of heating assembly 300.Heating assembly 300 generally includes an electrical heater 301 and may be used in or with any suitable refrigerator appliance as a defrost heater. For example, heating assembly 300, including electrical heater 301, may be used as defrost heater 214 in refrigeration system 200to defrost evaporator 210.Thus, heating assembly 300 is discussed in greater detail below in the context of refrigerator appliance 10.

Heating assembly 300 may include features for defrosting evaporator 210 while operating such that a surface temperature of heating assembly 300 (e.g., the temperature at an exterior surface of sheath 310) is well below a maximum temperature (e.g., an auto-ignition temperature of a flammable refrigerant within evaporator 210).As used herein, the term "well below" means no less than seventy-five degrees Celsius (75° C, which is 348.15 K) when used in the context of temperatures. Thus, for example, the surface temperature of heating assembly 300 may be no less than one hundred degrees Celsius (100 °C, which is 373.15 K) below the auto-ignition temperature of the flammable refrigerant within evaporator 210 during operation of heating assembly 300 in certain exemplary embodiments.

As shown in FIG. 3, heating assembly 300 includes an electrical heater 301 having a sheath 310 formed into any suitable shape. For example, as shown in FIG. 3, sheath 310 may be U-shaped in certain exemplary embodiments. Alternatively, sheath 310 may be straight, circular, arcuate, have multiple coils, etc. Sheath 310 is a generally solid and non-permeable metal structure that does not permit the passage of liquids, such as water. Sheath 310 may be constructed of or with a suitable thermally conductive metal material. For example, sheath 310 may be constructed of or with steel or aluminum (including alloys thereof).

As shown in FIG. 3, electrical heater 301 extends between a first end portion 302 and a second end portion 304.Thus, for example, first end portion 302 and second end portion 304 of electrical heater 301 are disposed at or adjacent a respective terminal end of sheath 310.Each of first end portion 302 and second end portion 304 are sealed to prevent the entry of water or moisture within sheath 310.For example, electrical connections or terminals 306 may be positioned at one or both of first end portion 302 and second end portion 304 of electrical heater 301.Optionally, electrical heater 301 may be coupled to an electrical power supply (not shown) at terminals 306.

Electrical heater 301 defines a length (shown with dashed line L in FIG. 3) between the first and second end portions 302, 304 of electrical heater 301.The length L of electrical heater 301 may be any suitable length. For example, the length L of electrical heater 301 may be equal to or less than two (2) feet (0.6096 m) between each terminal 306.

Turning now to FIG. 4, sheath 310 has an oppositely-disposed pair of surfaces 312, 314, extending along a circumferential direction C. The sheath 310 has an exterior surface 312 and interior surface 314.Within sheath 310, an enclosed volume 316 is defined (e.g.,by interior surface 314).In turn, exterior surface 312 is directed (i.e., faces) radially outward, away from enclosed volume 316, while interior surface 314 is directed radially inward, towards enclosed volume 316 The enclosed volume 316 is defined along the length L from first end portion 302 to second end portion 304 (FIG. 3).

A hydrophobic layer 324 is formed on the sheath 310 being along the length L from first end portion 302 to second end portion 304-FIG. 3). The hydrophobic layer 324 is formed on exterior surface 312. When assembled, the outermost (e.g., radially outermost) surface of electrical heater 301 is formed from hydrophobic layer 324 and, thus, render sheath 310 hydrophobic. In other words, hydrophobic layer 324 defines a solid surface on the outer portion of electrical heater 301 that has a water contact angle larger than ninety (90) degrees (e.g., between 90 degrees and 150 degrees). When assembled, hydrophobic layer 324 extends directly from sheath 310 (e.g., outward along a radial direction R).In turn, hydrophobic layer 324 defines a radial thickness MT (e.g., minimal radial thickness) directly outward from sheath 310. Optionally, MT may be between ten (10) nanometers and fifty (50) micrometers.

Hydrophobic layer 324 may include or be formed from a suitable material, such as manganese oxide polystyrene, zinc oxide polystyrene, precipitated calcium carbonate, carbon nanotubes, a fluorinated silane, or a fluoropolymer. Moreover, hydrophobic coating layer 324 may be applied or generated on sheath 310 according to a suitable process, such as chemical etching, solution immersion, laser electrodeposition, template deposition, or spray coating. Thus, hydrophobic layer 324 may formed via a positive application of material (e.g., as a coating) or, alternatively, formed via removal of a portion of material (e.g., chemical or later etching).

The electrical heater 301 repels water that falls thereon (e.g., from evaporator 210-FIG. 2) and prevents boiling of the same. Moreover, noise generated by the system may generally be reduced (e.g., during defrost operations).

In optional embodiments, an oxidation layer322 is formed on sheath 310, for example, along the length L from first end portion 302 to second end portion 304 (FIG. 3).For instance, an oxidation layer 322 may be formed on interior surface 314.Oxidation layer 322 may be formed from a suitable process such that oxidation layer322 extends directly from sheath 310 (e.g., inward along the radial direction R).Optionally, the oxidation layer 322 may be anodized aluminum oxide, such as Al₂O₃ (e.g., formed on an aluminum sheath 310). Advantageously, oxidation layer322 may electrically insulate sheath 310, while conducting heating therethrough.

As illustrated in FIG. 4, various components of heating assembly 300 are disposed within enclosed volume 316 of sheath 310 The heating assembly 300 includes a resistive element or wire 318 disposed within enclosed volume 316 of sheath 310.In other words, sheath 310 is disposed about resistive element 318 (e.g., along a circumferential direction C defined about resistive element 318).Resistive element 318 is generally configured to generate heat in response to an electrical current directed to electrical heater 301 (e.g., at terminals 306-FIG. 3).Resistive element 318 may be any suitable resistive heating element, such as a nickel chromium alloy wire.

Sheath 310 is also packed with a thermally conductive electrical insulation 319, such as magnesium dioxide or vitrified magnesite. Specifically, thermally conductive electrical insulation 319 may be radially positioned between the resistive element 318 and the sheath 310.As shown, thermally conductive electrical insulation 319 may separate resistive element 318 and sheath 310 along a radial direction R defined from resistive element 318.Moreover, thermally conductive electrical insulation 319 may prevent electrical conduction between resistive element 318 and sheath 310, while permitting heat conduction therethrough.

Resistive element 318 may be coupled to terminals 306 (FIG. 3) at opposite ends of resistive element 318.Thus, a voltage applied across terminals 306 may induce a current within resistive element 318 that in turn causes resistive element 318 to increase in temperature. Heat transfer between resistive element 318 and sheath 310 via thermally conductive electrical insulation 319 may heat sheath 310 during operation of heating assembly 300.Thus, sheath 310, resistive element 318 and thermally conductive electrical insulation 319 may collectively form a Calrod^{®} heating resistance element (e.g., in certain exemplary embodiments).

This written description uses examples to disclose the invention, including the best mode, and also to enable any person skilled in the art to practice the invention, including making and using any devices or systems and performing any incorporated methods. The scope of the invention is defined by the claims.

## Claims

1. A heating assembly (300) for a refrigerator appliance, the heating assembly (300) being configured to be positioned adjacent an evaporator (210) of a refrigerator appliance (10); wherein the heating assembly (300) comprises:
a sheath (310) defining an enclosed volume (316) along a length between a first end portion (302) and a second end portion (304) of the heating assembly (300), wherein the sheath (310) has an exterior surface (312) and an interior surface (314), and the exterior surface (312) is directed radially outward, away from the enclosed volume (316), while the interior surface (314) is directed radially inward, towards the enclosed volume (316);
a resistive wire (318) disposed within the enclosed volume (316) to generate heat in response to an electrical current; and
**characterized by**
a hydrophobic layer (324) formed on the sheath (310) along the length from the first end portion (302) to the second end portion (304), wherein the hydrophobic layer (324) is formed on the exterior surface (312), and the hydrophobic layer (324) has a water contact angle larger than ninety degrees.

2. The heating assembly (300) of claim 1, wherein the heating assembly (300) further comprises a thermally conductive electrical insulation (319) radially positioned between the resistive wire (318) and the sheath (310).

3. The heating assembly (300) of claim 1, wherein the sheath (310) comprises an aluminum material.

4. The heating assembly (300) of claim 1, wherein a maximum surface temperature of the heating assembly (300) is no greater than three hundred sixty degrees Celsius (633.15 K) during operation of the heating assembly (300).

5. The heating assembly (300) of claim 1, wherein the hydrophobic layer (324) defines a radial thickness between ten nanometers and fifty micrometers.

6. The heating assembly (300) of claim 1, wherein the heating assembly (300) further comprises:
an oxidation layer (322) formed on the sheath from the first end portion (302) to the second end portion (304), wherein the sheath (310) comprises an interior surface (314) directed toward the resistive wire (318) and an exterior surface (312) directed away from the resistive wire (318), and wherein the oxidation layer (322) is formed on the interior surface (314).

7. The heating assembly (300) of claim 1, wherein the hydrophobic layer (324) comprises manganese oxide polystyrene, zinc oxide polystyrene, precipitated calcium carbonate, carbon nanotubes, a fluorinated silane, or a fluoropolymer.

## Patentansprüche

1. Heizbaugruppe (300) für ein Kühlgerät, wobei die Heizbaugruppe (300) dazu eingerichtet ist, neben einem Verdampfer (210) eines Kühlgeräts (10) positioniert zu werden; wobei die Heizbaugruppe (300) Folgendes aufweist:
einen Mantel (310), der entlang einer Länge zwischen einem ersten Endabschnitt (302) und einem zweiten Endabschnitt (304) der Heizbaugruppe (300) ein umschlossenes Volumen (316) definiert, wobei der Mantel (310) eine Außenfläche (312) und eine Innenfläche (314) aufweist und die Außenfläche (312) radial nach außen, von dem umschlossenen Volumen (316) weg, gerichtet ist, während die Innenfläche (314) radial nach innen, zu dem umschlossenen Volumen (316) hin, gerichtet ist;
einen Widerstandsdraht (318), der innerhalb des umschlossenen Volumens (316) angeordnet ist, um als Reaktion auf einen elektrischen Strom Wärme zu erzeugen; und
**gekennzeichnet durch**
eine hydrophobe Schicht (324), die auf dem Mantel (310) entlang der Länge von dem ersten Endabschnitt (302) bis zu dem zweiten Endabschnitt (304) ausgebildet ist, wobei die hydrophobe Schicht (324) auf der Außenfläche (312) ausgebildet ist und die hydrophobe Schicht (324) einen Wasserkontaktwinkel von mehr als neunzig Grad aufweist.

2. Heizbaugruppe (300) nach Anspruch 1, wobei die Heizbaugruppe (300) ferner eine wärmeleitende elektrische Isolierung (319) aufweist, die radial zwischen dem Widerstandsdraht (318) und dem Mantel (310) angeordnet ist.

3. Heizbaugruppe (300) nach Anspruch 1, wobei der Mantel (310) ein Aluminiummaterial aufweist.

4. Heizbaugruppe (300) nach Anspruch 1, wobei eine maximale Oberflächentemperatur der Heizbaugruppe (300) während des Betriebs der Heizbaugruppe (300) nicht mehr als dreihundertsechzig Grad Celsius (633,15 K) beträgt.

5. Heizbaugruppe (300) nach Anspruch 1, wobei die hydrophobe Schicht (324) eine radiale Dicke zwischen zehn Nanometern und fünfzig Mikrometern definiert.

6. Heizbaugruppe (300) nach Anspruch 1, wobei die Heizbaugruppe (300) ferner Folgendes aufweist:
eine Oxidationsschicht (322), die auf dem Mantel von dem ersten Endabschnitt (302) bis zu dem zweiten Endabschnitt (304) ausgebildet ist, wobei der Mantel (310) eine zu dem Widerstandsdraht (318) hin gerichtete Innenfläche (314) und eine von dem Widerstandsdraht (318) weg gerichtete Außenfläche (312) aufweist und wobei die Oxidationsschicht (322) auf der Innenfläche (314) ausgebildet ist.

7. Heizbaugruppe (300) nach Anspruch 1, wobei die hydrophobe Schicht (324) Manganoxid-Polystyrol, Zinkoxid-Polystyrol, gefälltes Calciumcarbonat, Kohlenstoffnanoröhren, ein fluoriertes Silan oder ein Fluorpolymer aufweist.

## Revendications

1. Ensemble chauffant (300) pour un appareil de réfrigération, l'ensemble chauffant (300) étant configuré pour être positionné de manière adjacente à un évaporateur (210) d'un appareil de réfrigération (10) ; dans lequel l'ensemble chauffant (300) comprend :
une gaine (310) définissant un volume clos (316) sur une longueur entre une première partie d'extrémité (302) et une seconde partie d'extrémité (304) de l'ensemble chauffant (300), dans lequel la gaine (310) présente une surface extérieure (312) et une surface intérieure (314), et la surface extérieure (312) est dirigée radialement vers l'extérieur, à l'écart du volume clos (316), tandis que la surface intérieure (314) est dirigée radialement vers l'intérieur, vers le volume clos (316) ;
un fil résistif (318) disposé à l'intérieur du volume clos (316) pour générer de la chaleur en réponse à un courant électrique ; et
**caractérisé par**
une couche hydrophobe (324) formée sur la gaine (310) sur la longueur de la première partie d'extrémité (302) à la seconde partie d'extrémité (304), dans lequel la couche hydrophobe (324) est formée sur la surface extérieure (312), et la couche hydrophobe (324) présente un angle de contact avec l'eau supérieur à quatre-vingt-dix degrés.

2. Ensemble chauffant (300) selon la revendication 1, dans lequel l'ensemble chauffant (300) comprend en outre une isolation électrique thermoconductrice (319) positionnée radialement entre le fil résistif (318) et la gaine (310).

3. Ensemble chauffant (300) selon la revendication 1, dans lequel la gaine (310) comprend un matériau en aluminium.

4. Ensemble chauffant (300) selon la revendication 1, dans lequel la température de surface maximale de l'ensemble chauffant (300) ne dépasse pas trois cent soixante degrés Celsius (633,15 K) pendant le fonctionnement de l'ensemble chauffant (300).

5. Ensemble chauffant (300) selon la revendication 1, dans lequel la couche hydrophobe (324) définit une épaisseur radiale comprise entre dix nanomètres et cinquante micromètres.

6. Ensemble chauffant (300) selon la revendication 1, dans lequel l'ensemble chauffant (300) comprend en outre :
une couche d'oxydation (322) formée sur la gaine de la première partie d'extrémité (302) à la seconde partie d'extrémité (304), dans lequel la gaine (310) comprend une surface intérieure (314) dirigée vers le fil résistif (318) et une surface extérieure (312) dirigée à l'écart du fil résistif (318), et dans lequel la couche d'oxydation (322) est formée sur la surface intérieure (314).

7. Ensemble chauffant (300) selon la revendication 1, dans lequel la couche hydrophobe (324) comprend du polystyrène à l'oxyde de manganèse, du polystyrène à l'oxyde de zinc, du carbonate de calcium précipité, des nanotubes de carbone, un silane fluoré ou un fluoropolymère.
